# EUROPÄISCHE PATENTSCHRIFT

(11) **EP 0 864 067 B1**
(45) Veröffentlichungstag und Bekanntmachung des Hinweises auf die Patenterteilung: **12.12.2001**
(21) Anmeldenummer: 96938190.4
(22) Anmeldetag: 13.11.1996
(51) Int. Cl.: F23N 5/18, F23N 1/02

(54) **GAFLAMMBEHANDLUNGSVORRICHTUNG ZUR VORBEHANDLUNG VON OBERFLÄCHEN AUS KUNSTSTOFF DURCH ERHÖHUNG DER OBERFLÄCHENENERGIE AN DEN ZU BESCHICHTENDEN OBERFLÄCHEN**
GAS FLAME TREATMENT APPARATUS FOR PRETREATMENT OF SURFACES OF PLASTIQUE MATERIAL BY INCREASING THE SURFACE ENERGY AT THE SURFACES TO BE COATED
APPAREIL DE TRAITEMENT A FLAMME DE GAZ POUR PRETRAITEMENT DES SURFACES DE MATIERE PLASTIQUE PAR AUGMENTATION DE L'ENERGIE SUPERFICIELLE DES SURFACES A REVETIR

(30) Priorität: 27.11.1995 DE 19544179
(43) Veröffentlichungstag der Anmeldung: 16.09.1998
(73) Patentinhaber: arcotec GmbH, 71297 Mönsheim (DE)
(72) Erfinder: BLOSS, Fritz, D-71297 Mönsheim (DE); FREI, Peter, D-75181 Pforzheim (DE); HILL, Manfred, D-75173 Pforzheim (DE)
(74) Vertreter: Maser, Jochen, Dipl.-Ing.
(86) Internationale Anmeldenummer: EP9604959
(87) Internationale Veröffentlichungsnummer: WO9720175

(56) Entgegenhaltungen:
- EP-A- 0 188 763
- EP-A- 0 488 969
- WO-A-91/06809
- WO-A-93/11391
- DE-A- 2 812 605

## Beschreibung

Die Erfindung betrifft eine Gasflammbehandlungsvorrichtung zur Vorbehandlung von Oberflächen aus Kunststoff durch Erhöhung der Oberflächenenergie an den zu beschichtenden Oberflächen mit zumindest einem Brenner gemäß dem Oberbegriff des Anspruchs 1.

Bei der Beschichtung von Oberflächen, wie beispielsweise Veredelung von Kunststoffen oder Bedrucken oder Bekleben von Folien, handelt es sich zum großen Teil um unpolare Werkstoffe, die - ungeachtet ihrer sonstigen Vorzüge - keine Neigung zeigen, mit weiteren Stoffen, wie beispielsweise Lacken, Druckfarben, Klebstoffe oder dergleichen, eine Haftung einzugehen. Deshalb ist es erforderlich, die zu beschichtenden Oberflächen zu aktivieren, um eine ausreichende Benetzung und Haftung der Beschichtung zu ermöglichen. Dabei wird neben einem Koronaentladungs- und Niederdruckplasmaverfahren ein Gasflammverfahren eingesetzt.

Bei Gasflammverfahren wird die zu beschichtende Oberfläche mit einer von einem Brenner erzeugten Gasflamme behandelt. Bei dieser Vorbehandlung handelt es sich um ein Verfahren durch das eine Erhöhung der Oberflächenenergie erzielt wird. Die Oberflächenenergie wird im allgemeinen als Maß für eine zufriedenstellende Haftung angegeben, wobei die Oberflächenenergie des Trägermaterials um einen Betrag von beispielsweise 10 mN/m größer sein soll als die Oberflächenspannung des aufzutragenden Mediums.

Es hat sich gezeigt, daß bei einem rein stöchiometrischen Gas-/Luftgemisch für eine Gasflammbehandlung lediglich eine Flamme erreicht wurde, die die höchstmögliche Temperatur und eine stabile Form aufweist, jedoch keine Wirkung hinsichtlich der Verbesserung der Haftung zeigte. Eine Verringerung des Sauerstoffanteils hat ergeben, daß die Flamme instabil wird, da der fehlende Sauerstoff aus der Umgebungsluft angezogen wurde. Dadurch hat eine derartige Flamme eine reduzierende Wirkung, was ebenfalls nicht vorteilhaft ist. Bei einer Erhöhung des Sauerstoffanteils gegenüber dem stöchiometrischen Maß nimmt der überschüssige Sauerstoff ebenfalls an der Reaktion an der zu behandelnden Oberfläche teil, so daß - nachdem das Gas restlos verbrannt ist - der überschüssige Sauerstoff in Form von Radikalen und diversen lonen im Verbrennungsprodukt verbleiben, wodurch eine oxidierende Flamme entsteht.

Die Oberflächenbehandlung mit einer Flamme, deren Sauerstoffanteil über das stöchiometrische Maß hinausgeht, bewirkt, daß durch die Wärmeeinwirkung Molekülketten des zu beschichtenden Materials aufgebrochen werden und die Sauerstoffbestandteile sich an diese Bruchstelle anbinden. Es entstehen somit im ursprünglich unpolaren Material polare Moleküle, wodurch sich eine gute Haftung für das Beschichtungsmaterial ergibt. Ein wesentlicher Aspekt für die Wirkung der Gasflammbehandlung ist das Verhältnis des Gas-/Luftgemisches.

Aus der DE 28 12 605 A 1 ist eine Vorrichtung zur Gasflammbehandlung von Werkstoffen, wie beispielsweise Kunststoffe, bekannt geworden. Diese Vorrichtung weist einen Brenner auf, dem über eine mit Sicherheitsventilen versehene Mischstrecke ein Gas-/Luftgemisch zugeführt wird. In dieser Mischstrecke ist vor den Sicherheitsventilen eine Durchflußmeßeinheit vorgesehen, welche das Verhältnis von Kohlenwasserstoff, der über eine erste Leitung zugeführt wird und von Luft, die über ein Gebläse zugeführt wird, ermittelt. Derartige Vorrichtungen weisen jedoch den Nachteil auf, daß diese nur über das Mischungsverhältnis von Sauerstoff zu Gas eine Aussage treffen können, jedoch nicht über die Leistung bezüglich der Durchflußmenge von Gas und Sauerstoff, die das Ergebnis der Behandlung ebenfalls mitbestimmt. Darüber hinaus kann nur erschwert eine Einstellung der abzugebenden Leistung am Brenner eingestellt werden. Dadurch ist eine aufwendige manuelle Einstellung erforderlich, die zunächst einen Abgleich auf die für die Vorbehandlung erforderliche Leistung an der Durchflußmenge von dem Gas-/Luftgemisch erfordert und anschließend eine Einstellung auf das entsprechende Mischungsverhältnis zwischen Gas und Luft, wobei der Sauerstoffanteil über dem stöchiometrischen Maß liegen soll oder eine zusätzliche Messung der Brennerleistung erforderlich ist. Derartige Einrichtungen können nicht bei einer automatischen Fertigung eingesetzt werden, wie dies beispielsweise bevorzugt in der Automobilindustrie vorgesehen ist, bei der Stoßfänger aus Kunststoff in unterschiedlichen Größen nach der Vorbehandlung lackiert werden.

Des weiteren ist aus der WO 93/113 91 eine Vorrichtung zur Überwachung eines Schweißbrenners sowie eine Steuerung hierzu bekannt geworden. Diese Steuerung weist Regelschleifen auf, welche eine individuelle Zuführung der gasförmigen Flüssigkeiten zum Schweißbrenner ermöglicht. Hierzu können in dem Brenner Durchflußmeßfühler und/oder Druckfühler integriert sein und in einer Anordnung von Reglern der Versorgungskreise zwischengeschaltet. Diese Anordnung weist den Nachteil auf, daß durch die integrierte Anordnung der Regler in dem Brenner aufgrund der Erhitzung des Brenners die Meßwerte verfälscht werden. Darüber hinaus ist durch die Anordnung der Regler und Zusammenführung der Zuführungen in dem Brenner einer turbulenten Strömung zur Ausbildung einer Flamme gegeben. Dies ist bei der Steuerung von Schweißbrennern unschädlich, da diese im stöchiometrischen Mischungsverhältnis betrieben werden, da bei diesem Mischungsverhältnis die Flammentemperatur am höchsten ist. Jedoch ist diese Vorrichtung und Steuerung für den Einsatz bei Gasflammverfahren zur Vorbehandlung von Kunststoffoberflächen durch Erhöhung der Oberflächenenergie an zu beschichtenden Oberflächen nicht geeignet, da eine derartig ausgebildete Flamme zur Zerstörung des Materials führt.

Des weiteren ist aus dem Stand der Technik eine Einrichtung für Brennersteuerung für Gasflammen bekannt, bei der eine Messung der Flammentemperatur als Kriterium für die Einstellung und Regelung des Mischungsverhältnisses herangezogen wird. Diese Einrichtung weist jedoch den Nachteil auf, daß eine genaue Bestimmung des Mischungsverhältnisses nicht ermöglicht ist. Dies beruht darauf, daß die höchste Temperatur der Flamme bei einem stöchiometrischen Gas-/Luftgemisch erzielt wird. Bei der Einstellung des erforderlichen Sauerstoffüberschusses ergibt sich jedoch eine gegenüber der höchsten Temperatur niedrigere Temperatur, die als Sollwert einem Regler zugeführt werden soll. Dabei kann nicht erkannt werden, ob die Temperaturerniedrigung auf einem Sauerstoffüberschuß oder auf einem überhöhten Gasanteil beruht, der ebenso eine Absenkung der Flammentemperatur zu Folge hat. Eine genaue Bestimmung kann somit nicht erfolgen, da bei gleicher Temperatur sowohl ein Sauerstoffüberschuß als auch ein überhöhter Gasanteil vorliegen kann.

Der Erfindung liegt deshalb die Aufgabe zugrunde, eine Gasflammbehandlungsvorrichtung zur Vorbehandlung von Oberflächen aus Kunststoff durch Erhöhung der Oberflächenenergie an den zu beschichtenden Oberflächen zu schaffen, die eine einfache Handhabung sowohl bei dem Einsatz in der automatischen Fertigung als auch bei der Einstellung eines über das stöchiometrische Maß hinausgehenden Sauerstoffanteils ermöglicht.

Diese Aufgabe wird erfindungsgemäß durch die kennzeichnenden Merkmale des Anspruchs 1 gelöst.

Durch diese Gasflammbehandlungsvorrichtung zur Vorbehandlung von Oberflächen aus Kunststoff durch Erhöhung der Oberflächenenergie an den zu beschichtenden Oberflächen ist eine Haftverbesserung und somit auch eine Verbesserung der Benetzbarkeit für die Oberflächen der zu beschichtenden Gegenstände ermöglicht. Durch die besondere Ausgestaltung der Steuereinrichtung unter Verwendung der Thermoanemometer als Durchflußmengenmeßfühler und deren Anordnung vor einer Mischstrecke getrennt vom Brenner ist aufgrund der von der Temperatur nicht beeinflußten Erfassung der Durchflußmenge an Gas und Luft eine exakte Einstellung eines Gas-/Luftgemischverhältnisses auf ein überstöchiometrisches Maß ermöglicht sein, wodurch ein maximales Aufbringen der Molekülketten des zu beschichtenden Materials gegeben ist. Durch die von dem Regler ausgegebenen Regelgrößen können die Durchflußmengenmeßeinrichtungen eingestellt werden, so daß ein überstöchiometrisches Maß des Gas-/Luftgemisches für die Gasflammbehandlung während des Prozesses aufrecht erhalten bleibt. Gleichzeitig kann durch die Erfassung der tatsächlichen Durchflußmenge mittels den Durchflußmengenmeßeinrichtungen beim Aufsummieren der Durchflußmenge die an den Brenner abgegebene Leistung erfaßt werden.

Des weiteren weist die erfindungsgemäße Ausgestaltung der Steuereinrichtung den Vorteil auf, daß die durch diese Mischstrecke geschaffene getrennte Anordnung zwischen Brenner und Durchflußmengenmeßeinrichtung eine einfache Handhabung der Brenner in der automatischen Fertigung gegeben ist. Ebenso kann schnell und einfach ein Brenner ausgewechselt werden für eine neue Vorbehandlung, ohne daß ein neuer Abgleich der Durchflußmengenmeßeinrichtungen erforderlich ist. Durch die zentrale Recheneinheit kann die Steuerung in kürzester Zeit auf eine neue Vorbehandlung angepaßt werden. Hierfür sind in der zentralen Recheneinheit vorteilhafterweise mehrere Standard-Mischungsverhältnisse gespeichert sind, die in Abhängigkeit des verwendeten Gases, wie beispielsweise Erdgas (Methan), Propan oder Butan einfach abgerufen werden können. In Abhängigkeit der abzugebenden Leistung am Brenner kann dann die zentrale Recheneinheit an die Rechner entsprechende Regelgrößen ausgeben, so daß bei exakter Einstellung der Regelventile eine optimale Gasflamme am Brenner vorliegt. Darüber hinaus können die erforderlichen Durchflußmengen auf bestimmte Parameter, wie beispielsweise die Art und die Fläche des zu behandelnden Materials, als auch die Überfahrgeschwindigkeit, mit dem Brenner über die zu behandelnde Oberfläche eingestellt werden. Anwendungsspezifisch können dann bei der Behandlung eines neuen Materials eine schnelle und einfache Umstellung hinsichtlich der Parameter für die Behandlung gegeben sein, die auch in eine automatische Prozeßsteuerung eingebunden sein kann. Darüber hinaus kann sichergestellt sein, daß durch eine Falscheinstellung eine Beschädigung des zu behandelnden Materials vermieden werden kann.

Diese Ausgestaltung ermöglicht des weiteren, daß durch eine einfache Eingabe der Parameter für das zu behandelnde Material ein hoher Bedienkomfort gegeben sein kann, der auf jegliche Anwendung angepaßt werden kann.

Nach einer weiteren vorteilhaften Ausgestaltung der Erfindung ist vorgesehen, daß der als Durchflußmengen-Meßeinrichtung eingesetzte Thermoanemometer in einem Rohr wenigstens zwei Sensoren aufweist. Eine Durchflußmengenmessung erfolgt dadurch, daß der erste Sensor die Wärme des Gasstromes bzw. Luftstromes mißt und der zweite nachgeschaltete Sensor auf eine vorgegebene konstante Temperatur aufgeheizt wird. Ein Maß für die durchfließende Masse beziehungsweise Menge an Luft/Gas kann in der nachzuführenden Menge an Energie gegeben sein, um den zweiten Sensor auf einer konstanten Temperatur zu halten.

Eine alternative Ausführungsform eines Thermoanemometers kann dadurch gegeben sein, daß der nachgeschaltete Sensor mit einem konstanten Strom beheizt wird, wobei dann die Temperaturänderung gemessen werden kann, die wiederum ein Maß für die Durchflußmenge darstellt.

In den weiteren Ansprüchen sind vorteilhafte Ausführungsformen und Weiterbildungen der Erfindung angegeben.

In der Zeichnung ist ein bevorzugtes Ausführungsbeispiel der Erfindung dargestellt und in der nachfolgenden Beschreibung näher erläutert. Es zeigen:

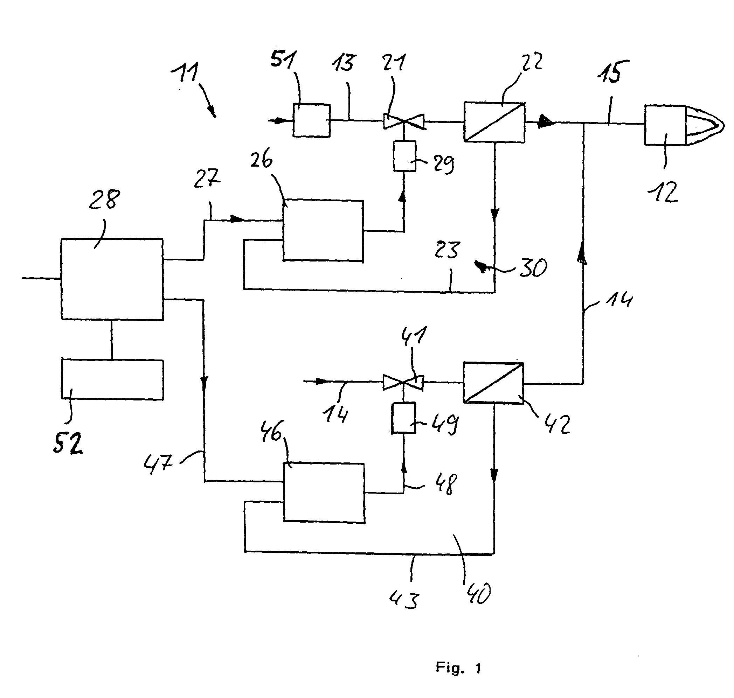

- Fig. 1: ein Blockschaltbild einer erfindungsgemäßen Steuereinrichtung mit Brenner.

In Fig. 1 ist ein Blockschaltbild einer Steuereinrichtung 11 einer Gas-/Luftgemischregelung für eine Gasflammbehandlung mit einem Brenner 12 dargestellt. Es versteht sich, daß auch eine Mehrfachbrenneranordnung anschließbar ist. Dem Brenner 12 wird über eine Luftzuführleitung 13 und eine Gaszuführleitung 14, die in eine gemeinsame Mischstrecke 15 zum Brenner 12 übergeht, ein Gas/Luftgemisch zugeführt. Die benötigte Luft wird über ein Gebläse 51 aus der Umgebung bereit gestellt, wobei ein derartiges Gebläse 51 in einem Bereich bis höchstens 200 mbar arbeitet. Das zu Behandlung erforderliche Gas wird in Gas flaschen bereit gestellt oder kann durch Anschluß an eine Erdgasleitung gegeben sein. In den Gasflaschen wird Propan und Butan bereitgestellt. Die Steuereinrichtung 11 weist einen Leistungsbereich 30 : 1 mit hinreichender Linearität auf.

Die Steuereinrichtung 11 weist für die exakte Zuführung der Luft einen Regelkreis 30 auf.

In der Luftzuführleitung 13 ist stromauf dem Gebläse 51 ein Luftmengen-Regelventil 21 angeordnet, dessen Öffnungs- und Schließstellung motorisch getrieben ist. Dem Luftmengen-Regelventil 21 ist eine Durchflußmengen-Meßeinrichtung 22 nachgeschalten, mit der die dem Brenner 12 zugeführte Menge an Luft erfaßt wird. Die Durchflußmengen-Meßeinrichtung 22, die als Thermoanemometer ausgebildet sein kann, gibt über eine Signalleitung 23 die erfaßten Istwerte an einen Regler 26 ab, der Wiederum über eine Signalleitung 27 von einer zentralen Recheneinheit 28 voreingestellte Sollwerte erhält und mit den zugeführten Istwerten vergleicht. Der Regler 26 steuert dann in Abhängigkeit der Abweichungen des Istwertes zu dem Sollwert über eine Steuerleitung 28 ein Stellglied 29 des Luftmengen-Regelventils 21 an, um die Ventileinstellung entsprechend der Abweichung vom Sollwert zu öffnen oder zu schließen.

Ein analoger Aufbau des oben beschriebenen Regelkreises 30 ist durch einen Regelkreis 40 für das zuzuführende Gas gegeben. In der Zuführleitung 14 ist ein Gasmengenventil 41 vorgesehen. Stromauf ist eine Durchflußmengen-Meßeinrichtung 42 gegeben, die eine Signalleitung 43 zum Regler 46 hin aufweist. Dieser erhält von der zentralen Recheneinheit 28 über eine Signalleitung 47 entsprechende Sollwerte, die in Abhängigkeit der Istwerte als neue Regelgröße über die Signalleitung 48 dem Stellglied 49 zugeführt werden und die Öffnungs- und Schließstellung des Gasmengenventils 41 entsprechend ändern.

Die zentrale Recheneinheit 28 ist mit einem Eingabefeld 52 verbunden, an dem beispielsweise ein oder mehrere Bedienelemente für die Einstellung der Luftmenge und für die Gasmenge vorgesehen sind. Des weiteren können Bedienelemente vorgesehen sein, mit denen unterschiedliche Einstellungen für Leistung, Datenausgabe und Dateneingabe möglich sind. Beispielsweise kann die Auswahl von vorbestimmten Gas-/Luftmischungsverhältnissen abgerufen werden, wobei Standardeinstellungen für ein Luft-/Ergasgemisch von 11 : 1, ein Luft-/Propangemisch von 25 : 1 und ein Luft-/Butangemisch von 33 : 1 vorgesehen sein kann. Darüber hinaus kann ein derart vorgegebenes Mischungsverhältnis nach oben oder unten korrigiert werden. Des weiteren ermöglicht das Eingabefeld 52 eine manuelle Eingabe der an den Brenner 12 abzugebenden Leistung. In der zentralen Recheneinheit 28 kann abgelegt sein, daß bei einer bestimmten Leistung des Brenners 12 eine bestimmte Durchflußmenge in Liter/Minute an Luft und Gas zugeführt werden muß, um den notwendigen Sauerstoffüberschuß des Gas-/Luftgemisches einzustellen. Diese Werte werden als Sollwerte an die Regler 26, 46 über die Signalleitungen 27, 47 dann abgegeben. An dem Eingabefeld 52 können des weiteren die aktuell eingestellten Daten über ein Display ausgegeben werden, so daß auch eine optische Überwachung gegeben sein kann. Des weiteren kann das Eingabefeld 52 eine Schnittstelle aufweisen, über die gespeicherte Prozeßdaten abgefragt und ausgedruckt werden können oder über die externe Sollwerte übertragen werden können. Darüber hinaus kann über eine derartige oder weitere Schnittstelle die zentrale Rechnereinheit mit eine zentralen Prozeßüberwachung einer automatischen Fertigung auf die entsprechenden Prozeßschritte abgestimmt werden.

Somit kann eine programmierbare Steuereinrichtung gegeben sein, die in einer automatischen Fertigung als auch als Einzelgerät einsetzbar ist. Diese Steuereinrichtung weist einen hohen Bedienkomfort für jede individuelle Anwendung auf und ist unmittelbar nach dem Einschalten betriebsbereit. Darüber hinaus ist ein wartungsfreies System gegeben.

## Patentansprüche

1. Gasflammbehandlungsvorrichtung zur Vorbehandlung von Oberflächen aus Kunststoff durch Erhöhung der Oberflächenenergie an den zu beschichtenden Oberflächen mit einer Steuereinrichtung einer Gas-/Luftgemischregelung, mit zumindest einem Brenner (12), mit einer Luftzuführleitung (13), mit einer Gaszuführleitung (14), die ein die Durchflußmenge von Gas regelbares Ventil (41) aufweist und mit einer zum Brenner (12) führenden Mischstrecke (15) eines Gas/Luftgemisches,
**dadurch gekennzeichnet,**
- **daß** die Luftzuführleitung (13) ein die Durchflußmenge von Luft regelbares Ventil (21) aufweist,
- **daß** eine zentrale Recheneinheit (28) vorgesehen ist, die in Abhängigkeit der Soll-Werte für das Gas-/Luftgemisch und des Soll-Wertes für die Leistung des Brenners (12) jeweils zumindest eine Regelgröße an einen Regler (26) zur Steuerung des Luftventils (21) und an einen weiteren Regler (46) zur Steuerung des Gasventils (41) ausgibt,
- **daß** die Regelgrößen, die im Regler (26, 46) vorliegen, mit von einer Durchflußmengen-Meßeinrichtung (22) der Luftzuführleitung (13) und einer Durchflußmengen-Meßeinrichtung (42) der Gaszuführleitung (14) ermittelten Ist-Werten vergleichbar sind, und die vom Regler (26, 46) ausgegebenen Regelgrößen an die Regelstrecke anpaßbar sind,
- **daß** die Durchflußmengen-Meßeinrichtungen (22, 42) als Thermoanemometer ausgebildet und vor der Mischstrecke (15) getrennt von dem zumindest einen Brenner (12) angeordnet sind, und
- **daß** die zugeführte Luft in der Luftzuführleitung (13) einen Druck von höchstens 200 mbar aufweist.

2. Gasflammbehandlungsvorrichtung nach Anspruch 1, **dadurch gekennzeichnet, daß** ein Thermoanemometer vorgesehen ist, bei dem mit einem ersten Sensor die Wärme des Gasstromes erfaßbar ist und ein zweiter Sensor beheizbar ist, wobei die nachzuführende Energiemenge auf eine konstante Temperatur des zweiten Sensors als Maß für die Durchflußmenge erfaßbar ist.

3. Gasflammbehandlungsvorrichtung nach Anspruch 1 oder 2, **dadurch gekennzeichnet, daß** ein mit einem Stellglied (29, 49) regelbares Ventil (21, 41) vorgesehen ist.

4. Gasflammbehandlungsvorrichtung nach einem der vorhergehenden Ansprüche, **dadurch gekennzeichnet, daß** die aktuellen Werte der Brennerleistung und des Mischungsverhältnisses von Gas und Luft von der zentralen Recheneinheit (28) und auf einer Anzeige einer Eingabevorrichtung darstellbar ist.

5. Gasflammbehandlungsvorrichtung nach einem der vorhergehenden Ansprüche, **dadurch gekennzeichnet, daß** ein Leistungsbereich der Steuereinrichtung mit einem Einstellbereich bis in etwa 30 : 1 vorgesehen ist.

6. Gasflammbehandlungsvorrichtung nach einem der vorhergehenden Ansprüche, **dadurch gekennzeichnet, daß** die Luftversorgung durch Druckluft vorgesehen ist.

7. Gasflammbehandlungsvorrichtung nach einem der Ansprüche 1 bis 5, **dadurch gekennzeichnet, daß** die Luftzuführleitung (13) ein Zuluftgebläse (51) aufweist, mit dem Umgebungsluft ansaugbar ist.

8. Gasflammbehandlungsvorrichtung nach einem der vorhergehenden Ansprüche, **dadurch gekennzeichnet, daß** die Gasversorgung durch Erdgas (Methan) vorgesehen ist.

9. Gasflammbehandlungsvorrichtung nach einem der Ansprüche 1 bis 8, **dadurch gekennzeichnet, daß** die Gasversorgung von Propan oder Butan in Behältern bereitstellbar ist.

10. Gasflammbehandlungsvorrichtung nach einem der vorhergehenden Ansprüche, **dadurch gekennzeichnet, daß** eine Mehrfachbrenneranordnung anschließbar ist, die über mehrere von der Mischstrecke abzweigende Zweigleitungen das Gas-/Luftgemisch zuführbar ist.

## Claims

1. Gas-flame treatment appliance for the pretreatment of plastic surfaces by an increase in the surface energy on the surfaces to be coated, with a control device of a gas/air mixture regulation system, with at least one burner (12), with an air supply line (13), with a gas supply line (14) which has a valve (41) capable of regulating the throughflow quantity of gas, and with a mixing stage (15), leading to the burner (12), for a gas/air mixture,
**characterized**
- **in that** the air supply line (13) has a valve (21) capable of regulating the throughflow quantity of air,
- **in that** a central computing unit (28) is provided, which, as a function of the desired values for the gas/air mixture and of the desired value for the output of the burner (12), in each case transmits at least one regulating variable to a controller (26) for the control of the air valve (21) and to a further controller (46) for the control of the gas valve (41),
- **in that** the regulating variables which are available in the controller (26, 46) can be compared with actual values determined by a throughflow-quantity measuring device (22) of the air supply line (13) and a throughflow-quantity measuring device (42) of the gas supply line (14), and the regulating variables transmitted by the controller (26, 46) can be adapted to the controlled system,
- **in that** the through-quantity measuring devices (22, 42) are designed as thermoanemometers and are arranged upstream of the mixing stage (15) separately from the at least one burner (12), and
- **in that** the air supplied in the air supply line (13) has a pressure of at most 200 mbar.

2. Gas-flame treatment appliance according to Claim 1, **characterized in that** a thermoanemometer is provided, in which the heat of the gas stream can be detected by a first sensor and a second sensor is capable of being heated, the energy quantity to be subsequently supplied for a constant temperature of the second sensor being capable of being detected as a measure of the throughflow quantity.

3. Gas-flame treatment appliance according to Claim 1 or 2, **characterized in that** a valve (21, 41) capable of being regulated by means of an actuator (29, 49) is provided.

4. Gas-flame treatment appliance according to one of the preceding claims, **characterized in that** the current values of the burner output and of the mixture ratio of gas and air can be presented by the central computing unit (28) and on a display of an input apparatus.

5. Gas-flame treatment appliance according to one of the preceding claims, **characterized in that** an output range of the control device with a setting range up to approximately 30:1 is provided.

6. Gas-flame treatment appliance according to one of the preceding claims, **characterized in that** the air supply is provided by means of compressed air.

7. Gas-flame treatment appliance according to one of Claims 1 to 5, **characterized in that** the air supply line (13) has an inflow-air blower (51), by means of which ambient air can be sucked in.

8. Gas-flame treatment appliance according to one of the preceding claims, **characterized in that** the gas supply is provided by natural gas (methane).

9. Gas-flame treatment appliance according to one of Claims 1 to 8, **characterized in that** the gas supply can be provided by propane or butane in containers.

10. Gas-flame treatment appliance according to one of the preceding claims, **characterized in that** a multiple burner arrangement can be connected, which is capable of supplying the gas/air mixture via a plurality of branch lines branching off from the mixing stage.

## Revendications

1. Appareil de traitement à flamme de gaz pour le prétraitement de surfaces en matière plastique par augmentation de l'énergie superficielle au niveau des surfaces à revêtir, comprenant un dispositif de commande d'une régulation de mélange gaz/air, avec au moins un brûleur (12), avec une conduite d'alimentation en air (13), avec une conduite d'alimentation en gaz (14), qui présente une soupape (41) permettant d'ajuster le débit de gaz et avec une section de mélange (15) d'un mélange gaz/air conduisant au brûleur (12),
**caractérisé en ce que**
- la conduite d'alimentation en air (13) présente une soupape (21) permettant d'ajuster le débit d'air,
- il est prévu une unité de calcul centrale (28) qui, en fonction de la valeur de consigne pour le mélange gaz/air et de la valeur de consigne pour la puissance du brûleur (12), fournit dans chaque cas une grandeur de réglage à un régulateur (26) pour la commande de la soupape pour l'air (21) et à un autre régulateur (46) pour la commande de la soupape pour le gaz (41),
- les grandeurs de réglage, qui sont dans le régulateur (26, 46), sont comparables à des valeurs effectives détectées par un dispositif de mesure du débit (22) de la conduite d'alimentation en air (13) et par un dispositif de mesure du débit (42) de la conduite d'alimentation en gaz (14), et les grandeurs de réglage fournies par le régulateur (26, 46) peuvent être adaptées à la section de réglage,
- les dispositifs de mesure de débit (22, 42) sont réalisés sous la forme de thermomanomètres et sont séparés, avant la section de mélange (15), de l'au moins un brûleur (12), et
- l'air acheminé dans la conduite d'alimentation en air (13) présente une pression d'au plus 200 mbars.

2. Appareil de traitement à flamme de gaz selon la revendication 1, **caractérisé en ce qu'**il est prévu un thermomanomètre dans lequel la chaleur du courant gazeux peut être détectée avec un premier capteur, et un deuxième capteur peut être chauffé, la quantité d'énergie à fournir pouvant être détectée comme mesure du débit, à une température constante du deuxième capteur.

3. Appareil de traitement à flamme de gaz selon la revendication 1 ou 2, **caractérisé en ce qu'**il est prévu une soupape (21, 41) réglable avec un organe de réglage (29, 49).

4. Appareil de traitement à flamme de gaz selon l'une quelconque des revendications précédentes, **caractérisé en ce que** les valeurs actuelles de la puissance du brûleur et du rapport du mélange de gaz et d'air peuvent être représentées par l'unité de calcul centrale (28) et sur un écran d'un dispositif d'affichage.

5. Appareil de traitement à flamme de gaz selon l'une quelconque des revendications précédentes, **caractérisé en ce qu'**il est prévu une plage de puissance du dispositif de commande avec une plage d'ajustement jusqu'à approximativement 30:1.

6. Appareil de traitement à flamme de gaz selon l'une quelconque des revendications précédentes, **caractérisé en ce que** l'alimentation en air est prévue par de l'air comprimé.

7. Appareil de traitement à flamme de gaz selon l'une quelconque des revendications 1 à 5, **caractérisé en ce que** la conduite d'alimentation en air (13) présente une soufflante d'air d'alimentation (51) avec laquelle l'air environnant peut être aspiré.

8. Appareil de traitement à flamme de gaz selon l'une quelconque des revendications précédentes, **caractérisé en ce que** l'alimentation en gaz est assurée par du gaz naturel (méthane).

9. Appareil de traitement à flamme de gaz selon l'une quelconque des revendications 1 à 8, **caractérisé en ce que** l'alimentation en gaz peut être réalisée par du propane ou du butane dans des réservoirs.

10. Appareil de traitement à flamme de gaz selon l'une quelconque des revendications précédentes, **caractérisé en ce qu'**un agencement de brûleurs multiples peut être raccordé, lequel peut être alimenté en mélange gaz/air par le biais de plusieurs conduites à ramification partant de la section de mélange.
